(19) Europäisches Patentamt
European Patent Office
Office européen des brevets

(11) Numéro de publication: **0 244 008 B1**

(12) **FASCICULE DE BREVET EUROPEEN**

(45) Date de publication de fascicule du brevet: **13.07.94** (51) Int. Cl.[5]: **C08K 5/57**, C08L 27/16

(21) Numéro de dépôt: **87200677.0**

(22) Date de dépôt: **09.04.87**

(54) **Compositions à base de polymères du fluorure de vinylidène présentant une fumigénicité réduite.**

(30) Priorité: **21.04.86 FR 8605839**

(43) Date de publication de la demande:
**04.11.87 Bulletin 87/45**

(45) Mention de la délivrance du brevet:
**13.07.94 Bulletin 94/28**

(84) Etats contractants désignés:
**AT BE CH DE FR GB IT LI LU NL SE**

(56) Documents cités:
**EP-A- 0 107 220**
**US-A- 4 357 434**

(73) Titulaire: **SOLVAY (Société Anonyme)**
**Rue du Prince Albert, 33**
**B-1050 Bruxelles(BE)**

(72) Inventeur: **Simoens, Anthony**
**Avenue de Celles, 27**
**B-5030 Vedrin(BE)**
Inventeur: **Hannecart, Etienne**
**Arboretumlaan, 38**
**B-1980 Tervueren(BE)**

(74) Mandataire: **Marckx, Frieda et al**
**Solvay**
**Département de la Propriété Industrielle**
**310, rue de Ransbeek**
**B-1120 Bruxelles (BE)**

**EP 0 244 008 B1**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

## Description

La présente invention concerne des compositions à base de polymères du fluorure de vinylidène présentant une fumigénicité réduite.

Les polymères du fluorure de vinylidène sont difficilement inflammables et auto-extinguibles. On a déjà proposé d'y incorporer, avant leur mise en oeuvre, des additifs retardateurs de flamme tels que certains composés spécifiques de l'étain, en vue d'améliorer encore leur résistance à l'inflammation. Dans la demande de brevet EP-A-O 058 308 on recommande à cet effet les oxydes d'étain, les phosphates d'étain, l'oxalate stanneux et leurs mélanges. Néanmoins, les retardateurs de flamme se sont généralement révélés inaptes à empêcher totalement, à température élevée, la combustion des objets façonnés en polymères du fluorure de vinylidène.

Par ailleurs, la réduction de la fumigénicité, c'est-à-dire de l'aptitude à engendrer de la fumée par combustion, et le retard à l'inflammation d'une composition polymérique sont deux phénomènes différents qui n'ont pas de relation directe entre eux, à tel point que certains composés retardateurs de flamme agissent dans certains cas comme des générateurs de fumée, une fois que la combustion a effectivement commencé, ou encore que certains réducteurs de fumée induisent dans certains cas des phénomènes d'incandescence qui favorisent l'inflammation.

On sait à présent que, contrairement à l'opinion généralement répandue, la combustion des objets façonnés en polymères du fluorure de vinylidène engendre l'émission de fumée en quantité suffisante pour constituer un inconvénient aussi grave que les flammes elles-mêmes, dans la mesure où elle rend plus difficile l'intervention des secours.

Dans le brevet français FR-A-82 17123 (SOLVAY & Cie) on décrit l'utilisation de dérivés de molybdène, tels que les molybdates de métaux, pour réduire efficacement la quantité de fumée émise lors de la combustion des polymères du fluorure de vinylidène. Toutefois, l'incorporation de molybdates de métaux dans les polymères du fluorure de vinylidène conduit à une opacification des objets façonnés, réduisant par là les possibilités d'emploi dans des domaines d'utilisation où une transparence élevée est exigée, tels que par exemple le gainage de câbles électriques.

La présente invention, telle qu'elle est caractérisée dans les revendications, a donc pour but de procurer des agents fumicides également efficaces qui opacifient moins les objets façonnés que ceux de l'art antérieur. Les compositions selon l'invention présentent en outre une résistance accrue à l'inflammation, c'est-à-dire des indices limites d'oxygène élevés.

Selon l'invention, ces compositions contiennent, à titre de réducteur de fumée une quantité efficace d'un ou de plusieurs dicarboxylates de dialkylétain de formule générale

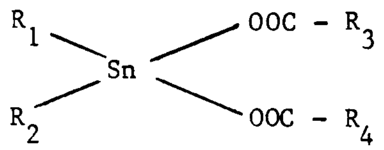

dans laquelle $R_1$ et $R_2$, identiques ou différents, représentent des radicaux alkyles comprenant de 1 à 6 atomes de carbone et $R_3$ et $R_4$, identiques ou différents, représentent des radicaux alkyles comprenant de 8 à 20 atomes de carbone.

On donne la préférence aux dicarboxylates de dialkylétain dont les radicaux alkyles $R_1$ et $R_2$ sont identiques et comprennent de 3 à 5 atomes de carbone et dont les radicaux alkyles $R_3$ et $R_4$ sont identiques et comprennent de 10 à 16 atomes de carbone. Un dicarboxylate de dialkylétain tout particulièrement préféré est le dilaurate de dibutylétain.

La quantité de dicarboxylate de dialkylétain (ci-après dénommé "dérivé organostannique") présente dans les compositions selon l'invention peut varier dans une large mesure, notamment en fonction du résultat visé et de la nature du dérivé organostannique utilisé. Habituellement, on utilise le dérivé organostannique à raison de 0,02-2 parties en poids, exprimées en étain métallique total, pour 100 parties de polymère du fluorure de vinylidène. De préférence, on l'utilise à raison de 0,05 à 1 partie et plus particulièrement encore de 0,10 à 0,50 partie en poids au total, exprimée en étain métallique, pour 100 parties de polymère.

En plus du dérivé organostannique, les compositions selon l'invention peuvent contenir tous les additifs usuels des polymères du fluorure de vinylidène, tels que des stabilisants, des matières de charge, des pigments, des retardateurs de flamme, des additifs polymériques, des lubrifiants, etc. Un avantage appréciable des agents fumicides selon l'invention réside dans le fait qu'ils présentent des propriétés

lubrifiantes, de sorte que l'addition d'un agent lubrifiant usuel, tel qu'une cire de polyoléfine, devient superflue. L'omission d'un agent lubrifiant usuel améliore encore sensiblement la transparence des objets façonnés résultants. En général, les compositions selon l'invention contiennent au moins 65 % en poids d'un ou plusieurs polymères du fluorure de vinylidène et, le plus souvent, au moins 80 % en poids de pareils polymères.

Par polymères du fluorure de vinylidène, on entend désigner tous les polymères contenant au moins 85 % molaires, et, de préférence, au moins 90 % molaires d'unités monomériques dérivées du fluorure de vinylidène. Les polymères du fluorure de vinylidène qui conviennent à la réalisation des compositions selon l'invention comprennent donc aussi bien les homopolymères du fluorure de vinylidène que ses copolymères contenant des unités monomériques dérivées d'un ou de plusieurs comonomères. Des résultats particulièrement avantageux sont obtenus avec les polymères du fluorure de vinylidène contenant au moins 90 % molaires d'unités monomériques dérivées du fluorure de vinylidène, le complément éventuel étant constitué de préférence d'unités monomériques dérivées d'autres oléfines fluorées, tels que le fluorure de vinyle, le trifluoréthylène, le chlorotrifluoréthylène, le tétrafluoréthylène et l'hexafluorpropylène.

La préparation des compositions selon l'invention ne présente pas de problème particulier, toutes les techniques habituelles de préparation de ces compositions pouvant être utilisées. Ainsi, on peut mélanger le dérivé organostannique avec le polymère de fluorure de vinylidène dès le stade de la polymérisation, soit par introduction directe dans le milieu de polymérisation, en fin de polymérisation, soit encore par addition au gâteau humide obtenu par essorage ou filtration de la dispersion aqueuse venant de polymérisation. Un mode opératoire particulièrement avantageux consiste à ajouter le dérivé organostannique au polymère du fluorure de vinylidène lors de la fabrication d'un prémélange, en même temps que les autres additifs entrant dans la composition. On peut aussi introduire le dérivé organostannique directement dans les appareils où le polymère du fluorure de vinylidène est fondu, tels que les extrudeuses à vis.

Les compositions selon l'invention sont aptes à être mises en oeuvre par tous les procédés classiques de transformation des matières thermoplastiques. Elles conviennent particulièrement pour la fabrication d'objets façonnés destinés à être utilisés dans des domaines d'application des polymères du fluorure de vinylidène où une réduction notable de la fumigénicité associée à une transparence élevée des objets façonnés est spécialement intéressante, tels que dans l'industrie du bâtiment et de l'aéronautique (tuyaux, gaines, films, peintures). Les compositions selon l'invention conviennent tout particulièrement pour la fabrication de gaines pour câbles électriques. Pour cette dernière application, on donne la préférence aux copolymères du fluorure de vinylidène contenant jusqu'à 10 % molaires d'unités monomériques dérivées d'autres oléfines fluorées.

Les exemples qui suivent illustrent l'invention sans toutefois la limiter.

Les formulations évaluées dans les exemples 1 et 2, selon l'invention, et 4 et 5, de référence, ont la composition suivante, les quantités étant exprimées en poids :

polymère du fluorure de vinylidène 100
cire de polyéthylène 0,2
additif fumicide voir Tableau I

La formulation évaluée dans l'exemple 3, selon l'invention, ne comprend pas de cire de polyéthylène.

Dans tous les exemples le polymère est un copolymère du fluorure de vinylidène contenant 10 % en poids d'unités monomériques dérivées d'une oléfine fluorée de marque déposée SOLEF et de type 11010 produit et commercialisé par SOLVAY & Cie.

Les compositions 1 à 5 ont été préparées par mélange de tous les ingrédients et malaxage du mélange à 180 °C pendant 5 minutes, après quoi on presse des plaques par pressage du crêpe à 180 °C pendant 2 minutes sous une pression de 98 bars. On a également préparé, dans les mêmes conditions, des plaques à partir d'une formulation sans additif fumicide contenant 0,2 partie de cire de polyéthylène pour 100 parties de polymère du fluorure de vinylidène (référence).

L'évaluation de la fumigénicité a été effectuée, sur des éprouvettes découpées dans les plaques pressées, à 650 °C, sous un débit d'air de 300 litres/heure, suivant la norme française enregistrée NF T51-073 de septembre 1977. Dans chacune des plaques pressées, on a découpé trois éprouvettes dont la masse a été choisie au cours d'un essai préliminaire pour que la densité optique maximale ne dépasse pas 2,5 au cours de l'essai de combustion.

Pour chacune des éprouvettes, on a enregistré la courbe de densité optique en fonction du temps. A partir de ces courbes, on a défini :

- l'unité conventionnelle de quantité de fumée U, à savoir, la quantité de fumée correspondant à une densité optique égale à 1 pendant une durée de 1 minute;
- la quantité totale de fumée émise au cours de l'essai, S, exprimée en unités conventionnelles.

A partir de ces données, on a calculé pour chacune des éprouvettes l'indice de fumée F, F étant égal à S/m, m étant la masse de l'éprouvette exprimée en g et on a fait la moyenne pour les trois éprouvettes.

L'abattement de fumée, exprimé en %, a ensuite été calculé suivant la formule :

$$\frac{F - F_o}{F_o} \times 100,$$

dans laquelle

F = indice de fumée moyen de l'échantillon examiné

$F_o$ = indice de fumée moyen d'un échantillon de référence sans additif fumicide. L'indice de fumée moyen $F_o$ de la formulation à base de copolymère SOLEF 11010 sans additif fumicide est de 5,94.

Dans le Tableau I, en annexe, sont consignés la nature et la quantité d'additif fumicide utilisé, l'abattement de fumée pour chaque composition, c'est-à-dire la réduction de fumée, exprimée en %, par rapport à la composition de référence ainsi que l'indice limite d'oxygène (ILO).

Dans le tableau II en annexe sont consignés les résultats relatifs à l'opacité ("haze"), mesurée selon la norme ASTM D1003, de films extrudés à 240 °C, d'une épaisseur de 200 microns, à partir des compositions selon les exemples 1 et 3, l'exemple de comparaison 5 et la composition de référence.

La comparaison des résultats des exemples selon l'invention 1, 2 et 3 avec ceux des exemples de comparaison 4 et 5 montre qu'à pouvoir fumicide équivalent au molybdate de calcium, les agents fumicides selon l'invention présentent l'avantage de moins opacifier les objets façonnés en polymères du fluorure de vinylidène.

TABLEAU I

| N° de l'exemple | Additif fumicide | | | Abattement de fumée, % | ILO |
|---|---|---|---|---|---|
| | Nature | Quantité | | | |
| | | en pcr* | en g de métal/ 100 g | | |
| 1 | dilaurate de dibutylétain | 0,6 | 0,112 | 58 | 62.5 |
| 2 | idem | 1,8 | 0,336 | 70 | N.D. ** |
| 3 | idem | 0,6 | 0,112 | 58 | 62 |
| 4 | molybdate de calcium | 0,2 | 0,096 | 58 | 58.2 |
| 5 | idem | 0,6 | 0,288 | 76 | N.D. |

* parties en poids poids pour 100 parties de résine.

** ND = non déterminé

TABLEAU II

Opacité des films

| | Trouble, % (norme ASTM D 1003) |
|---|---|
| Composition de référence | 63 |
| Composition selon l'exemple 1 | 69 |
| Composition selon l'exemple 3 | 52 |
| Composition selon l'exemple 4 | 74 |

## Revendications

1. Compositions à base de polymères du fluorure de vinylidène présentant une fumigénicité réduite, caractérisées en ce qu'elles contiennent à titre de réducteur de fumée une quantité efficace de dicarboxylate de dialkylétain de formule générale

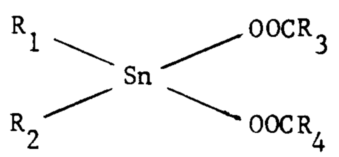

dans laquelle $R_1$ et $R_2$, identiques ou différents, représentent des radicaux alkyles comprenant de 1 à 6 atomes de carbone et $R_3$ et $R_4$, identiques ou différents, représentent des radicaux alkyles comprenant de 8 à 20 atomes de carbone.

2. Compositions selon la revendication 1, caractérisées en ce que les radicaux alkyles $R_1$ et $R_2$ sont identiques et comprennent de 3 à 5 atomes de carbone et en ce que les radicaux alkyles $R_3$ et $R_4$ sont identiques et comprennent de 10 à 16 atomes de carbone.

3. Compositions selon la revendication 1 ou 2, caractérisées en ce que le dicarboxylate de dialkylétain est le dilaurate de dibutylétain.

4. Compositions selon l'une quelconque des revendications 1 à 3, caractérisées en ce que le dicarboxylate de dialkylétain est utilisé à raison de 0,02 à 2 parties en poids, exprimées en étain métallique, pour 100 parties de polymère du fluorure de vinylidène.

5. Compositions selon la revendication 4, caractérisées en ce que le dicarboxylate de dialkylétain est utilisé à raison de 0,05 à 1 partie en poids, exprimée en étain métallique, pour 100 parties de polymère du fluorure de vinylidène.

6. Compositions selon l'une quelconque des revendications 1 à 5, caractérisées en ce que le polymère du fluorure de vinylidène est un homopolymère du fluorure de vinylidène.

7. Compositions selon l'une quelconque des revendications 1 à 5, caractérisées en ce que le polymère du fluorure de vinylidène est un copolymère du fluorure de vinylidène contenant au moins 90 % molaires de fluorure de vinylidène.

## Claims

1. Compositions based on vinylidene fluoride polymers exhibiting a reduced smoke generation, characterized in that they contain, as smoke reducer, an effective quantity of dialkyltin dicarboxylate of general formula

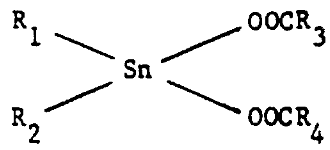

in which $R_1$ and $R_2$, which are identical or different, denote alkyl radicals containing from 1 to 6 carbon atoms, and $R_3$ and $R_4$, which are identical or different, denote alkyl radicals containing from 8 to 20 carbon atoms.

**2.** Compositions according to Claim 1, characterized in that the alkyl radicals $R_1$ and $R_2$ are identical and contain from 3 to 5 carbon atoms and in that the alkyl radicals $R_3$ and $R_4$ are identical and contain from 10 to 16 carbon atoms.

**3.** Compositions according to Claim 1 or 2, characterized in that the dialkyltin dicarboxylate is dibutyltin dilaurate.

**4.** Compositions according to any one of Claims 1 to 3, characterized in that the dialkyltin dicarboxylate is employed in a proportion of 0.02 to 2 parts by weight, expressed as tin metal, per 100 parts of vinylidene fluoride polymer.

**5.** Compositions according to Claim 4, characterized in that the dialkyltin dicarboxylate is employed in a proportion of 0.05 to 1 part by weight, expressed as tin metal, per 100 parts of vinylidene fluoride polymer.

**6.** Compositions according to any one of Claims 1 to 5, characterized in that the vinylidene fluoride polymer is a vinylidene fluoride homopolymer.

**7.** Compositions according to any one of Claims 1 to 5, characterized in that the vinylidene fluoride polymer is a vinylidene fluoride copolymer containing at least 90 mol% of vinylidene fluoride.

**Patentansprüche**

**1.** Zusammensetzungen auf der Basis von Vinylidenfluorid-Polymeren, die eine verringerte Raucherzeugung aufweisen, dadurch gekennzeichnet, daß sie als Rauchverminderer eine wirksame Menge Dialkylzinndicarboxylat der allgemeinen Formel

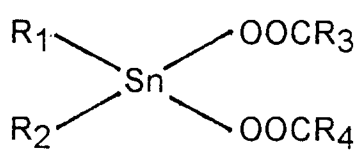

enthalten, in der $R_1$ und $R_2$, gleich oder verschieden, Alkylreste darstellen, die 1 bis 6 Kohlenstoffatome enthalten, und $R_3$ und $R_4$, gleich oder verschieden, Alkylreste darstellen, die 8 bis 20 Kohlenstoffatome enthalten.

**2.** Zusammensetzungen gemäß Anspruch 1, dadurch gekennzeichnet. daß die Alkylreste $R_1$ und $R_2$ gleich sind und 3 bis 5 Kohlenstoffatome enthalten und daß die Alkylreste $R_3$ und $R_4$ gleich sind und 10 bis 16 Kohlenstoffatome enthalten.

**3.** Zusammensetzungen gemäß Anspruch 1 oder 2, dadurch gekennzeichnet, daß das Dialkylzinndicarboxylat das Dibutylzinndilaurat ist.

**4.** Zusammensetzungen gemäß einem der Ansprüche 1 bis 3, dadurch gekennzeichnet, daß das Dialkylzinndicarboxylat zu 0,02 bis 2 Gewichtsteilen, ausgedrückt in metallischem Zinn, auf 100 Teile

Vinylidenfluorid-Polymer verwendet wird.

5. Zusammensetzungen gemäß Anspruch 4, dadurch gekennzeichnet daß das Dialkylzinndicarboxylat zu 0,05 bis 1 Gewichtsteil, ausgedrückt in metallischem Zinn, auf 100 Teile Vinylidenfluorid-Polymer verwendet wird.

6. Zusammensetzungen gemäß einem der Ansprüche 1 bis 5, dadurch gekennzeichnet, daß das Vinylidenfluorid-Polymer ein Vinylidenfluorid-Homopolymer ist.

7. Zusammensetzungen gemäß einem der Ansprüche 1 bis 5, dadurch gekennzeichnet, daß das Vinylidenfluorid-Polymer ein Vinylidenfluorid-Copolymer ist, das mindestens 90 Mol-% Vinylidenfluorid enthält.